# EUROPÄISCHE PATENTSCHRIFT

(11) **EP 3 366 917 B1**
(45) Veröffentlichungstag und Bekanntmachung des Hinweises auf die Patenterteilung: **04.09.2019**
(21) Anmeldenummer: 17158374.3
(22) Anmeldetag: 28.02.2017
(51) Int. Cl.: F03D 15/00, F03D 80/70

(54) **GETRIEBE FÜR EINE WINDENERGIEANLAGE**
TRANSMISSION FOR A WIND TURBINE
TRANSMISSION POUR UNE ÉOLIENNE

(43) Veröffentlichungstag der Anmeldung: 29.08.2018
(73) Patentinhaber: Nordex Energy GmbH, 22419 Hamburg (DE)
(72) Erfinder: Adler, Florian, 22397 Hamburg (DE); Dreher, Moritz, 22397 Hamburg (DE)
(74) Vertreter: Hauck Patentanwaltspartnerschaft mbB

(56) Entgegenhaltungen:
- WO-A2-2005/110032

## Beschreibung

Die vorliegende Erfindung betrifft ein Getriebe für eine Windenergieanlage, insbesondere das Hauptgetriebe einer Windenergieanlage. Ein solches Getriebe ist z.B. aus der WO 2005/110032 A2 bekannt.

Bei Windenergieanlagen können Betriebszustände auftreten, bei denen diese bei hoher Drehzahl und geringer elektrischer/mechanischer Belastung betrieben werden. Beispielsweise tritt eine solche Situation auf, wenn die Windenergieanlage ohne entgegenwirkendes Generatormoment betrieben wird. Insbesondere eine Wälzlagerung in einer schnell laufenden Stirnradstufe des Getriebes kann hierbei Schaden erleiden. Wenn eine Mindestbelastung des Wälzlagers unterschritten wird, besteht die Gefahr, dass die in den Lagern der Getriebewellen befindlichen Wälzkörper nicht mehr zwischen den Lagerringen abrollen, sondern über die Rollflächen gleiten. Wird das Generatormoment schnell wieder zugeschaltet, werden die Wälzkörper abrupt auf Rollgeschwindigkeit beschleunigt. Durch den zunehmenden Pressdruck im Lager versagt der Schmiermittelfilm und das Lager wird beschädigt.

Aus DE 10 2008 024 049 ist eine Lageranordnung zur Lagerung einer Welle in einer Aufnahmestruktur bekannt geworden. An der Welle ist ein Vorspannlager angeordnet, das über einen Zugkörper mit der feststehenden Aufnahmestruktur verbunden ist. Über den Zugkörper wird eine radiale Vorspannung in die Welle eingebracht.

Aus DE 10 2006 029 151 A1 ist eine Anordnung für ein Wälzlager mit einer kontrollierten Lagerbelastung bekannt. Zusätzlich zu dem eigentlichen Wälzlager ist eine Zusatzlagerung vorgesehen, mit der das Überschreiten einer Mindestbelastung für das Lager sichergestellt wird.

Der Erfindung liegt die Aufgabe zugrunde, ein Getriebe für eine Windenergieanlage bereitzustellen, das mit möglichst einfachen Mitteln eine Beschädigung seiner Wälzlager durch Unterschreiten deren Mindestbelastung vermeidet.

Erfindungsgemäß wird die Aufgabe durch ein Getriebe mit den Merkmalen aus Anspruch 1 gelöst. Vorteilhafte Ausgestaltungen bilden die Gegenstände der Unteransprüche.

Das erfindungsgemäße Getriebe ist vorgesehen und bestimmt zur Verwendung in einer Windenergieanlage. Bevorzugt werden Planetengetriebe in Windenergieanlagen eingesetzt. Das erfindungsgemäße Getriebe weist eine erste und eine zweite parallel zueinander angeordnete Welle auf. Die erste und zweite Welle sind in Wälzlagern gelagert. Das Getriebe besitzt eine Vorspanneinrichtung, die eine für die erste Welle und zweite Welle radial gerichtete Vorspannkraft in die Wellen einleitet. Die Vorspanneinrichtung ist erfindungsgemäß jeweils mit einem Ende auf einer Welle angeordnet und wirkt zwischen der ersten und der zweiten Welle. Gegenüber einer bekannten Vorspanneinrichtung aus dem Stand der Technik wirkt die erfindungsgemäße Vorspanneinrichtung zwischen zwei Wellen und verspannt diese radial gegeneinander. Auf diese Weise wird für die Wälzlagerungen beider Wellen ein Überschreiten einer Mindestlast sichergestellt.

In einer bevorzugten Ausgestaltung ist die Vorspanneinrichtung mit mindestens einer Hydraulikeinheit ausgestattet. Durch eine Betätigung der Hydraulikeinheit kann eine gewünschte radiale Vorspannkraft auf die beiden Wellen aufgebracht werden. Die Vorspanneinrichtung ist schalt- bzw. regelbar. Anders als bei Vorspanneinrichtungen mit konstant wirkender Vorspannkraft bietet die Hydraulikeinheit die Möglichkeit, die Vorspanneinrichtung wahlweise zu aktivieren oder zu deaktivieren bzw. die Höhe der Vorspannkraft einzustellen. Aus Gründen der Betriebssicherheit wird die Hydraulikeinheit bevorzugt mit einem Hydraulikfluid beaufschlagt, das mit einem im Getriebe verwendeten Schmiermittel verträglich ist. Bevorzugt ist das Hydraulikfluid mit dem Schmiermittel identisch. Bei entsprechender Ausgestaltung wird keine zusätzliche Hydraulikpumpe benötigt. Die ohnehin vorhandene Getriebeöl-Hauptstrompumpe kann die Hydraulikeinheit mit Druck versorgen, gegebenenfalls unter Zuhilfenahme eines hydraulischen Druckübersetzers oder Druckverstärkers.

In einer Ausgestaltung stützt sich die Vorspanneinrichtung über jeweils mindestens ein Wälz- und/oder Gleitlager auf den beiden Wellen ab. Auf der ersten und zweiten Welle ist jeweils ein Lager montiert. Die beiden Lager fluchten in radialer Richtung der Wellen. Am Außenring der Lager ist jeweils ein Stützring mit einer Aufnahme angeordnet. Die Hydraulikeinheit umfasst einen Hydraulikkolben und einen Hydraulikzylinder, welche jeweils mit einer Druckstange verbunden sind. Das freie Ende der Druckstangen ist in der Aufnahme jeweils eines der beiden Stützringe montiert.

In einer Ausgestaltung weist die Lagerung der ersten und zweiten Welle jeweils ein Loslager auf, wobei die Vorspanneinrichtung nahe an den Loslagern zwischen den Wellen montiert wird. Das Problem der Beschädigung des Wälzlagers durch Unterschreiten einer Mindestbelastung tritt insbesondere bei der Verwendung von Zylinderrollenlagern als Loslager auf. In dem die Vorspanneinrichtung nahe an dem oder den Loslagern montiert ist, wirkt die Vorspanneinrichtung direkt auf das räumlich benachbarte Loslager. Die Vorspanneinrichtung kann aber auch in der Nähe des Festlagers montiert werden, wenn hier eine Verspannung der Lager erforderlich ist.

In einer bevorzugten Weiterführung wirkt die Vorspanneinrichtung zwischen einer schnell drehenden Ausgangswelle und einer Zwischenwelle des Getriebes. Bei der Zwischenwelle kann es sich um eine langsam laufende Zwischenwelle oder eine Zwischenwelle mit mittlerer Geschwindigkeit handeln, insbesondere bei einem dreistufigen Planetengetriebe.

In einer weiter bevorzugten Ausgestaltung ist die Vorspanneinrichtung mit einer Vorspannfeder ausgestattet. Die Vorspannfeder ist dabei ausgebildet, eine radiale Verspannung zwischen den beiden Wellen herbeizuführen. Bei Druckbeaufschlagung des Hydraulikzylinders wird die Vorspannkraft aufgehoben. Bei der erfindungsgemäßen Ausgestaltung wird der Hydraulikzylinder dann mit einem Hydraulikdruck beaufschlagt, wenn das Getriebe zuverlässig über eine Minimalbelastung hinaus belastet ist. Droht die Gefahr, dass eine Unterbelastung erfolgt, so wird der Hydraulikzylinder nicht mit einem Druck beaufschlagt und die Vorspannfeder verspannt die beiden die Vorspanneinrichtung tragenden Wellen gegeneinander. Diese Ausgestaltung stellt eine sogenannte fail-safe-Lösung dar, da auch bei Ausfall der Hydraulikeinheit sichergestellt wird, dass eine Minimalbelastung auf der Lagern liegt.

Die Erfindung wird nachfolgend anhand einiger Figuren näher erläutert. Es zeigen:
- Fig. 1: einen Ausschnitt einer Windenergieanlage mit einer schematischen Ansicht aus dem Inneren des Maschinenhauses,
- Fig. 2: eine schematische Ansicht für ein Planetengetriebe, das bei einer Windenergieanlage eingesetzt werden kann,
- Fig. 3: eine Detailansicht des Getriebes mit der erfindungsgemäßen Vorspanneinrichtung und
- Fig. 4: eine Detailansicht des Getriebes mit einer weiteren Ausgestaltung einer federvorgespannten Vorspanneinrichtung.

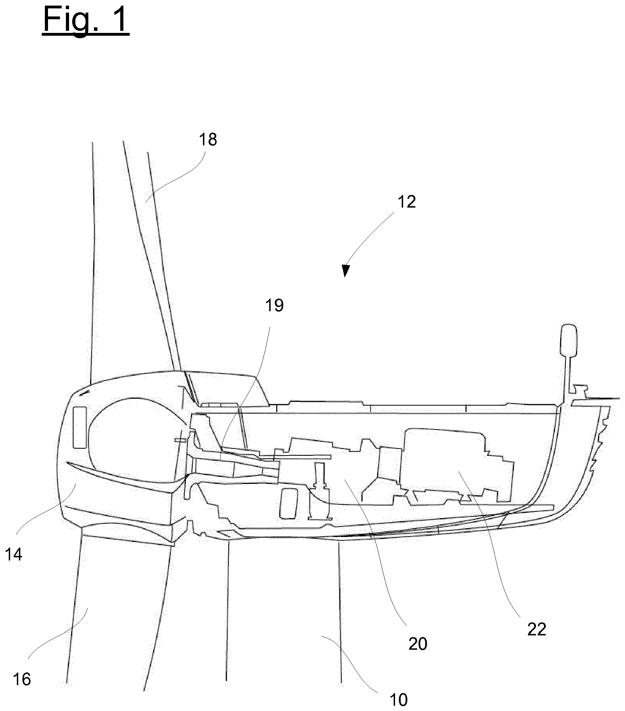

Fig. 1 zeigt in einer schematischen Detailansicht das Kopfende des Turms 10 einer Windenergieanlage. Auf dem Turm 10 gelagert ist ein Maschinenhaus 12, das den mechanischen Triebstrang und einen Generator trägt. Das Maschinenhaus 12 ist in der Regel um eine Turmlängsachse drehbar gelagert. Das Maschinenhaus 12 trägt zudem einen Rotor 14, der drehbar gelagert ist. Der Rotor 14 umfasst eine Nabe und Rotorblätter, von denen in der Seitenansicht der Fig. 1 die Rotorblätter 16 und 18 zu erkennen sind. Im regulären Betrieb der Windenergieanlage nimmt der Rotor 14 über die Rotorblätter 16, 18 ein mechanisches Drehmoment aus dem Wind auf, das über eine Rotorwelle 19 und ein Getriebe 20 an einen Generator 22 angelegt wird. Der Generator 22 erzeugt ein entsprechendes Gegenmoment für den Triebstrang, so dass dieser sich im Gleichgewicht befindet und sich mit konstanter Drehzahl drehen kann.

Im Betrieb einer Windenergieanlage kann aus verschiedenen Gründen zeitweise die Situation auftreten, dass die Windenergieanlage mit einer relativ hohen Drehzahl und geringer elektrischer / mechanischer Belastung betrieben wird. Dabei wird kein oder nur ein geringes Drehmoment über das Getriebe übertragen. In dieser Situation besteht die Gefahr, dass die in den Lagern der Getriebewellen befindlichen Wälzkörper nicht zwischen den Lagerringen abrollen, sondern, zum Teil ohne Schmierung, über die Rollflächen gleiten und diese beschädigen.

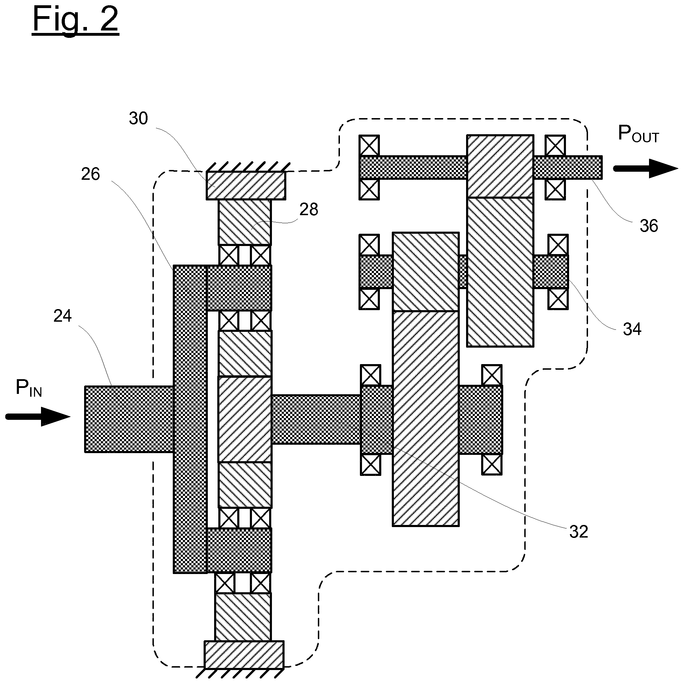

Fig. 2 zeigt eine schematische Ansicht eines dreistufigen Planetengetriebes. Eine zu übersetzende Eingangsgröße geht als Eingangsleistung P_{IN} auf die langsam laufende Welle 24, die mit dem Planetenträger 26 verbunden ist. Der Planetenträger 26 besitzt Planetenräder 28, die sich in einem Hohlrad 30 drehen und eine langsam drehende Zwischenwelle 32 antreiben. Über die langsam drehende Zwischenwelle 32 wird die Leistung auf die schnelllaufende Zwischenwelle 34 übersetzt, von wo aus sie auf die schnelllaufende Ausgangswelle 36 übersetzt wird. Die mechanische Ausgangsleistung P_{OUT} kann an der schnelllaufenden Ausgangswelle 36 entnommen werden. Das der Erfindung zugrundeliegende Problem, dass die Mindestlast der Wälzlager unterschritten wird, tritt insbesondere zwischen der schnelllaufenden Ausgangswelle 36 und der schnelllaufenden Zwischenwelle 34 auf.

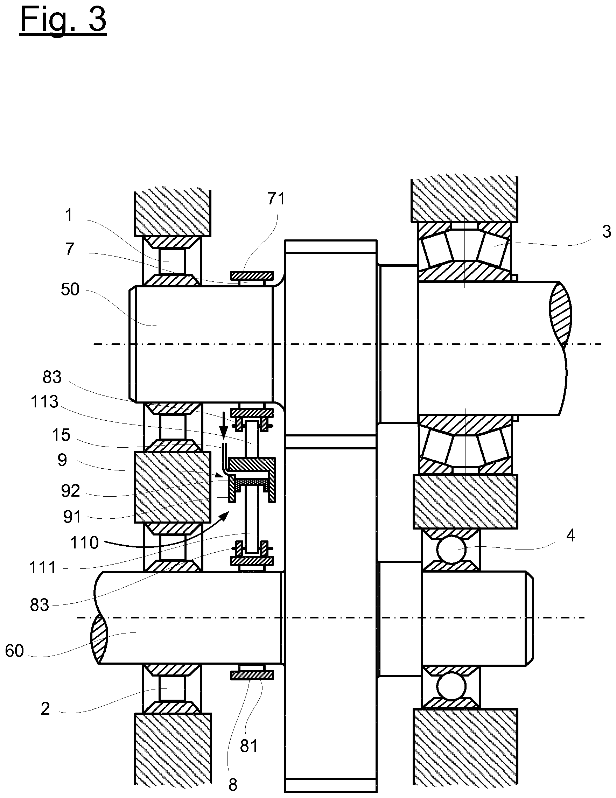

Fig. 3 zeigt hier eine Detailansicht, wobei die schnelllaufende Ausgangswelle 50 gegenüber der schnelllaufenden Zwischenwelle 60 abgestützt und vorgespannt ist. Die schnelllaufende Ausgangswelle 50 ist durch ein doppelreihiges Wälzlager 3 und ein Zylinderrollenlager 1 abgestützt. Die schnelllaufende Zwischenwelle 60 ist durch ein einreihiges Kugellager 4 und ein Zylinderrollenlager 2 abgestützt. Zwischen den Wellen 50 und 60 ist eine Vorspanneinrichtung 110 angeordnet. Die Vorspanneinrichtung 110 ist mit einem auf der Ausgangswelle 50 angeordneten Gleitlager 7 und einem auf der Zwischenwelle 60 angeordneten Gleitlager 8 verbunden. Die beiden Gleitlager 7 und 8 weisen jeweils einen Stützring 71, 81 mit einer Aufnahme 83 auf. Zwischen den Stützringen 71 und 81 befindet sich die Hydraulikeinheit 9. Der Hydraulikzylinder 91 und der Hydraulikkolben 92 sind mit Druckstangen 111 und 113 versehen. Die Druckstangen 111 und 113 sind in den Aufnahmen der Stützringe 71 und 81 mit geeigneten Verbindungsmitteln montiert. Über eine Zuleitung 15 wird dem Hydraulikzylinder 91 ein Hydraulikfluid zugeführt. Dadurch bewegt sich der Hydraulikkolben 92 aus dem Hydraulikzylinder 91 heraus und die Druckstangen 111 und 113 drücken die Wellen 50 und 60 in radialer Richtung auseinander. Hierdurch wird eine radiale Vorspannung zwischen den Wellen 50 und 60 aufgebaut.

Bei der in Fig. 3 dargestellten erfindungsgemäßen Vorspanneinrichtung muss die Hydraulikeinheit 9 mit Druck beaufschlagt sein, um eine Vorspannung zwischen den Wellen 50 und 60 herbeizuführen.

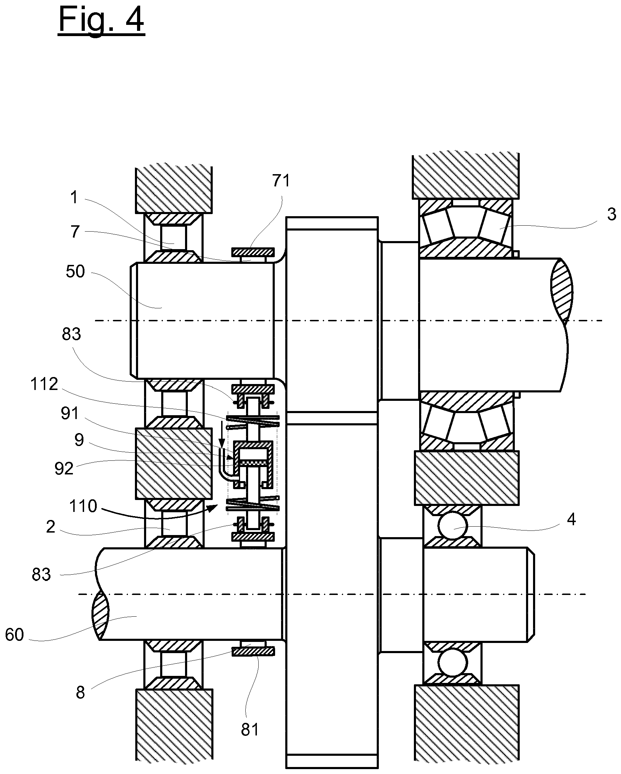

Fig. 4 zeigt eine alternative Ausgestaltung der erfindungsgemäßen Vorspanneinrichtung, bei der die Funktionsweise der Hydraulikeinheit 9 umgekehrt ist. Über eine Vorspannfeder 112 ist die Vorspanneinrichtung zwischen den Wellen 50 und 60 mit einer radialen Vorspannkraft ausgestattet. Wird die Hydraulikeinheit 9 mit Druck beaufschlagt, bewegt sich der Hydraulikkolben 92 in den Hydraulikzylinder 91 hinein und hebt die Vorspannkraft der Vorspannfeder 112 auf. Die Verspannung in radialer Richtung zwischen den Wellen 50 und 60 wird aufgehoben.

Bei der Ausgestaltung nach Fig. 4 handelt es sich um eine sogenannte Fail-Safe-Variante, bei der sichergestellt ist, dass bei Ausfall der Hydraulikeinheit 9 stets eine Mindestlast an den Lagern anliegt. Die Hydraulikeinheit 9 muss also arbeiten, damit keine radial wirkende Vorspannkraft auf die Wellen wirkt. Im Gegensatz dazu wird bei der Ausgestaltung nach Fig. 3 die Vorspannkraft nur dann erzeugt, wenn die Hydraulikeinheit mit Druck beaufschlagt ist.

### Bezugszeichenliste

- 1: Zylinderrollenlager
- 2: Zylinderrollenlager
- 3: doppelreihiges Wälzlager
- 4: Kugellager
- 7: Gleitlager
- 8: Gleitlager
- 9: Hydraulikeinheit
- 10: Turm
- 12: Maschinenhaus
- 13: Druckstange
- 14: Rotor
- 15: Zuleitung
- 16: Rotorblatt
- 18: Rotorblatt
- 19: Rotorwelle
- 20: Getriebe
- 22: Generator
- 24: langsam laufende Welle
- 26: Planetenträger
- 28: Planetenräder
- 30: Hohlrad
- 32: langsam laufende Zwischenwelle
- 34: schnelllaufende Zwischenwelle
- 36: schnelllaufende Ausgangswelle
- 50: schnelllaufende Ausgangswelle
- 60: schnelllaufende Zwischenwelle
- 71: Stützring
- 81: Stützring
- 83: Aufnahme
- 91: Hydraulikzylinder
- 92: Hydraulikkolben
- 110: Vorspanneinrichtung
- 111: Druckstange
- 112: Vorspannfeder
- 113: Druckstange

## Patentansprüche

1. Getriebe für eine Windenergieanlage, das mindestens eine erste und eine zweite Welle (50, 60) aufweist, die parallel zueinander angeordnet und in Wälzlagern (1, 2, 3, 4) gelagert sind, wobei eine Vorspanneinrichtung (110) für die Wälzlager (1, 2, 3, 4) vorgesehen ist, **dadurch gekennzeichnet, dass** die Vorspanneinrichtung (110) zwischen der ersten und der zweiten Welle (50, 60) eine Vorspannkraft erzeugt und jeweils mit einem Ende auf den Wellen (50, 60) abgestützt ist.

2. Getriebe nach Anspruch 1, **dadurch gekennzeichnet, dass** die Vorspanneinrichtung (110) mindestens eine Hydraulikeinheit (9) aufweist.

3. Getriebe nach Anspruch 2, **dadurch gekennzeichnet, dass** die Hydraulikeinheit (9) wahlweise mit einem Hydraulikfluid beaufschlagbar ist, wobei das Hydraulikfluid mit einem im Getriebe verwendeten Schmiermittel verträglich ist.

4. Getriebe nach Anspruch 3, **dadurch gekennzeichnet, dass** das Hydraulikfluid mit dem Schmiermittel identisch ist.

5. Getriebe nach einem der Ansprüche 1 bis 4, **dadurch gekennzeichnet, dass** sich die Vorspanneinrichtung (110) auf den beiden Wellen (50, 60) über jeweils ein Wälz- und/oder Gleitlager (7, 8) abstützt.

6. Getriebe nach Anspruch 5, **dadurch gekennzeichnet, dass** das Wälz- und/oder Gleitlager (7, 8) mit einem Stützring (71, 81) verbunden ist, welcher mit einer Aufnahme (83) versehen ist.

7. Getriebe nach einem der Ansprüche 2 bis 4, **dadurch gekennzeichnet, dass** die Hydraulikeinheit (9) einen Hydraulikzylinder (91) und einen Hydraulikkolben (92) aufweist, welche jeweils mit einer Druckstange (111, 113) verbunden sind.

8. Getriebe nach Anspruch 7, **dadurch gekennzeichnet, dass** der Hydraulikzylinder (91) mit einer Druckstange (113) und/oder der Hydraulikkolben (92) mit einer Druckstange (111) verbunden sind.

9. Getriebe nach einem der Ansprüche 1 bis 8, **dadurch gekennzeichnet, dass** die Lagerung der ersten und zweiten Welle jeweils ein Loslager (1, 2) aufweist, wobei die Vorspanneinrichtung nahe an den Loslagern zwischen den Wellen (50, 60) montiert wird.

10. Getriebe nach einem der Ansprüche 1 bis 9, **dadurch gekennzeichnet, dass** die Vorspanneinrichtung (110) zum Wirken zwischen einer schnelldrehenden Ausgangswelle (50) und einer Zwischenwelle (60) vorgesehen ist.

11. Getriebe nach einem der Ansprüche 2 bis 4, 7, 8 **dadurch gekennzeichnet, dass** die Vorspanneinrichtung (110) eine Vorspannfeder (112) aufweist, wobei durch eine Betätigung der Hydraulikeinheit (9) die Vorspannung der Vorspannfeder (112) aufgehoben wird.

## Claims

1. A gearbox for a wind turbine, which has at least one first and one second shaft (50, 60), which are arranged parallel to each other and supported in roller bearings (1, 2, 3, 4), wherein a preload means (110) for the roller bearings (1, 2, 3, 4) is provided, wherein the preload means (110) generates a preload force between the first and the second shaft (50, 60) and is supported with one end on the shafts (50, 60) in each case.

2. The gearbox as claimed in claim 1, wherein the preload means (110) has at least one hydraulic unit (9).

3. The gearbox as claimed in claim 2, wherein a hydraulic fluid can optionally be applied to the hydraulic unit (9), wherein the hydraulic fluid is compatible with a lubricant used in the gearbox.

4. The gearbox as claimed in claim 3, wherein the hydraulic fluid is identical with the lubricant.

5. The gearbox as claimed in any one of claims 1 to 4, wherein the preload means (110) is supported on both shafts (50, 60) by means of a roller and/or sliding bearing (7, 8) in each case.

6. The gearbox as claimed in claim 5, wherein the roller and/or sliding bearing (7, 8) is connected to a support ring (71, 81) that is provided with a receiver (83).

7. The gearbox as claimed in any one of claims 2 to 4, wherein the hydraulic unit (9) has a hydraulic cylinder (91) and a hydraulic piston (92) that are each connected to a push rod (111, 113).

8. The gearbox as claimed in claim 7, wherein the hydraulic cylinder (91) is connected to a push rod (113), and/or the hydraulic piston (92) is connected to a push rod (111).

9. The gearbox as claimed in any one of claims 1 to 8, wherein that the bearing system of the first and the second shaft has a floating bearing (1, 2) in each case, wherein the preload means is mounted close to the floating bearings between the shafts (50, 60).

10. The gearbox as claimed in any one of claims 1 to 9, wherein that the preload means (110) acts between a rapidly rotating output shaft (50) and an intermediate shaft (60).

11. The gearbox as claimed in any one of claims 2 to 4, 7, 8, wherein the preload means (110) has a preload spring (112), wherein an actuation of the hydraulic unit (9) causes the preloading of the preload spring (112) to be eliminated.

## Revendications

1. Transmission pour une éolienne, laquelle présente au moins un premier et un deuxième arbre (50, 60) disposés parallèlement l'un à l'autre et montés dans des paliers à rouleaux (1, 2, 3, 4), dans laquelle il est prévu un dispositif de précontrainte (110) pour les paliers à rouleaux (1, 2, 3, 4), **caractérisée en ce que** le dispositif de précontrainte (110) produit une force de précontrainte entre le premier et le deuxième arbre (50, 60) et s'appuie respectivement avec une extrémité sur les arbres (50, 60).

2. Transmission selon la revendication 1, **caractérisée en ce que** le dispositif de précontrainte (110) présente au moins une unité hydraulique (9).

3. Transmission selon la revendication 2, **caractérisée en ce que** l'unité hydraulique (9) peut être sollicitée au choix par un fluide hydraulique, le fluide hydraulique étant compatible avec un lubrifiant utilisé dans la transmission.

4. Transmission selon la revendication 3, **caractérisée en ce que** le fluide hydraulique est identique au lubrifiant.

5. Transmission selon l'une des revendications 1 à 4, **caractérisée en ce que** le dispositif de précontrainte (110) s'appuie sur les deux arbres (50, 60) respectivement par le biais d'un palier à rouleaux et/ou d'un palier lisse (7, 8).

6. Transmission selon la revendication 5, **caractérisée en ce que** le palier à rouleaux et/ou le palier lisse (7, 8) est/sont relié(s) à une bague d'appui (71, 81), laquelle est pourvue d'un logement (83).

7. Transmission selon l'une des revendications 2 à 4, **caractérisée en ce que** l'unité hydraulique (9) présente un cylindre hydraulique (91) et un piston hydraulique (92), lesquels sont respectivement reliés à une tige de pression (111, 113).

8. Transmission selon la revendication 7, **caractérisée en ce que** le cylindre hydraulique (91) est relié à une tige de pression (113) et/ou le piston hydraulique (92) est relié à une tige de pression (111).

9. Transmission selon l'une des revendications 1 à 8, **caractérisée en ce que** le support du premier et du deuxième arbre présente respectivement un palier libre (1, 2), le dispositif de précontrainte étant monté à proximité des paliers libres entre les arbres (50, 60).

10. Transmission selon l'une des revendications 1 à 9, **caractérisée en ce que** le dispositif de précontrainte (110) est prévu pour agir entre un arbre de sortie à rotation rapide (50) et un arbre intermédiaire (60).

11. Transmission selon l'une des revendications 2 à 4, 7, 8, **caractérisée en ce que** le dispositif de précontrainte (110) présente un ressort de précontrainte (112), dans laquelle un actionnement de l'unité hydraulique (9) permet de supprimer la précontrainte du ressort de précontrainte (112).
